# EUROPÄISCHE PATENTSCHRIFT

(11) **EP 0 433 777 B1**
(45) Veröffentlichungstag und Bekanntmachung des Hinweises auf die Patenterteilung: **01.03.1995**
(21) Anmeldenummer: 90123368.4
(22) Anmeldetag: 06.12.1990
(51) Int. Cl.: C08G 65/32

(54) **Verfahren zur Herstellung von Aminopolyalkylenoxiden**
Process for preparing amino polyalkylene oxides
Procédé de préparation d'amino polyalkylène oxides

(30) Priorität: 19.12.1989 DE 3941789
(43) Veröffentlichungstag der Anmeldung: 26.06.1991
(73) Patentinhaber: BAYER AG, 51368 Leverkusen (DE)
(72) Erfinder: Schäfer, Walter, Dr., W-5653 Leichlingen (DE); Müller, Hanns Peter, Dr., W-5060 Bergisch Gladbach 2 (DE); Ziemann, Heinz, Dr., W-5653 Leichlingen 1 (DE)

(56) Entgegenhaltungen:
- FR-A- 1 590 871
- GB-A- 2 175 910
- US-A- 4 766 245
- CHEMICAL ABSTRACTS, Band 95, Nr. 21, 23. November 1981, Columbus, Ohio, US; Zusammenfassung-Nr. 186621t, J.PASEK et al.: "Isoproylamine by reductive amination of acetone or 2-propanol", Seite 598, Spalte 2

## Beschreibung

Die vorliegende Erfindung betrifft ein Verfahren zur Herstellung von Aminopolyalkylenoxiden durch reduktive Aminierung von Hydroxypolyalkylenoxiden, wobei man als Katalysator Raney-Nickel bzw. Raney-Nickel/Eisen oder Raney-Cobalt (im folgenden Raney-Katalysatoren genannt) einsetzt, dem zusätzlich Aluminiumpulver zugemischt ist.

Raney-Nickel, Raney-Nickel/Eisen oder Raney-Cobalt eignen sich für die reduktive Aminierung von Hydroxylgruppen enthaltenden Verbindungen (vgl. z.B. Houben-Weyl XI/1 (1957) S. 108-134).

In der US-Patentschrift 47 66 245 wird der Einsatz von Raney-Nickel, das noch einen Teil des Aluminiums aus der Ausgangslegierung nach Behandlung mit Natronlauge enthält, als Katalysator für die reduktive Aminierung beschrieben. Das Aluminium ist bei diesem Katalysator das Einbettungsmaterial bzw. der Träger für das katalytisch wirksame Nickel und wird in dieser aktiven Form nicht mit dem Sauerstoff der Luft kontaktiert.

Es wurde nun überraschend gefunden, daß durch alleinigen Zusatz von Aluminiumpulver die Aktivität des Raney-Nickel, Raney-Nickel/Eisen oder Raney-Cobalt beträchtlich erhöht werden kann.

Gegenstand der vorliegenden Erfindung ist daher ein vereinfachtes Verfahren zur Herstellung von Aminopolyalkylenoxiden aus Hydroxypolyalkylenoxiden und Ammoniak und/oder primären bzw. sekundären Aminen in Gegenwart von Wasserstoff und Raney-Katalysatoren, welches dadurch gekennzeichnet ist, daß als Co-Katalysator - Aluminiumpulver eingesetzt wird.

Überraschend war es insbesondere, daß durch einfaches Zumischen von Aluminiumpulver zum Raney-Katalysator wie Raney-Nickel, Raney-Nickel/Eisen oder Raney-Cobalt, wobei kein so inniger Kontakt wie bei einer Legierung mit dem katalytisch wirkenden Metall zu erwarten ist, ja daß sogar bei Einsatz von Aluminiumpulver, das wochenlang der Luft ausgesetzt war, eine beträchtliche Erhöhung der katalytischen Aktivität des Katalysators zu beobachten ist.

Das Aluminiumpulver kann sowohl mit dem Katalysator in Form einer Mischung in das Reaktionsgemisch eingebracht werden, als auch separat vor oder nach dem Zufügen des Raney-Katalysators. Das Al-Pulver wird in einer Korngröße von etwa 4 - 100 »m, bevorzugt etwa 10-50 »m, eingesetzt.

Die in dem erfindungsgemäßen Verfahren der reduktiven Aminierung einzusetzenden, an sich bekannten Hydroxypolyalkylenoxide sind solche der allgemeinen Formel:

R[-(A)-OH]_{z}

worin bedeuten
- R: ein Rest einer Zerewitinow-aktiven Verbindung, erhältlich durch Abzug der aktiven Wasserstoffatome,
- A: mit O-Atomen unterbrochene, gegebenenfalls mit Alkylresten substituierte Kette aus gegebenenfalls unterschiedlichen Alkylenen, eines mittleren Molgewichts (Mn) von 500 - 10 000; z = 1-4.

Verbindungen der genannten Art sind z.B. in GB 971 173 beschrieben.

Hydroxypolyalkylenoxide, die bevorzugt eingesetzt werden, sind solche, in denen R ein Phendioxyrest ist, erhältlich durch Abzug von 2 phenolischen Wasserstoffatomen z.B. aus Hydrochinon, 4,4'-Dihydroxydiphenyl, 4,4'-Dihydroxydiphenylmethan, 2,2-Bis(4-hydroxyphenyl)propan, 1,1-Bis(4-hydroxyphenyl)ethan, 1,1-Bis(4-hydroxyphenyl)cyclopentan, 1,1-Bis(4-hydroxyphenyl)cyclohexan, 1,1-Bis(4-hydroxyphenyl), 4,4'-Dihydroxystilben, 4,4'-Dihydroxytolan, 4,4'-Dihydroxydiphenylether, 3,3'-Dihydroxydiphenylether, 1,4-Dihydroxynaphthalin, 1,5-Dihydroxynaphthalin und 1,6-Dihydroxynaphthalin, 1,7-Dihydroxynaphthain, 2,6-Dihydroxynaphthalin, 2,7-Dihydroxynaphthalin, 1,4-Bis(2-hydroxyethoxy)benzol, 1,5-Bis(2-hydroxyethoxy)naphthalin, 2,2-Bis-[4-(2-hydroxyethoxy)phenyl]propan.

Derartige Verbindungen werden z.B. hergestellt aus cyclischen Oxiden wie Ethylenoxid, Propylenoxid, Butylenoxid oder Tetrahydrofuran unter Einwirkung eines Katalysators gegebenenfalls in Anwesenheit einer Verbindung, die mehrere aktive Wasserstoffatome enthält (Encyclopedia of Polymer Science and Technology, Vol. 6, Seite 103-209 bzw. Vol. 13, Seite 670-689, Interscience Publishers, Inc. 1969).

Die Aminierungsreaktion zu aminterminierten Polyethern aus den entsprechenden Hydroxypolyethern geschieht in Gegenwart von Ammoniak, Wasserstoff und der erfindungsgemäßen Katalysatorinischung aus Raney-Nickel oder Raney-Nickel/Eisen oder Raney-Cobalt und Aluminiumpulver. Es ist zweckmäßig, Ammoniak als Lösungsmittel zu benutzen.

Für die Aminierung werden pro Hydroxylgruppe des Polyethers 4-150 Mol Ammoniak und 0,5-10 Mol an Wasserstoff zugesetzt.

Neben Ammoniak werden für das erfindungsgemäße Verfahren bevorzugt die folgenden Amine eingesetzt:
Methylamin, Dimethylamin und Morpholin.

Die Reaktionstemperaturen reichen von 140°C bis 250°C, wobei ein Druck von 35-350 atü (35-344 bar), vorzugsweise 140-180 atü (138-177 bar) erreicht wird. Die Reaktionszeiten liegen beim diskontinuierlichen Verfahren im Bereich von 0,5 bis 20 Stunden.

Bei einem Konti-Verfahren sollte die Durchflußrate 0,1 bis 1,5 g Ausgangsverbindung (Hydroxypolyether) pro cm³ Katalysator in der Stunde betragen.

Die erfindungsgemäß hergestellten Verbindungen eignen sich vor allem als Kettenverlängerer für Polyurethankunststoffe, als Epoxidhärter, als Klebstoffkomponente, als Modifikator in Polyamiden, als Komponente in oberflächenaktiven Verbindungen (Emulgator, Antistatikausrüstung von Textilien), oder als Schmierölzusatz.

Das erfindungsgemäße Verfahren soll anhand der folgenden Beispiele noch näher erläutert werden (%-Angaben sind - soweit nicht anders vermerkt - Gew.-%).

### Beispiel 1

1500 g eines Polytetrahydrofurans einer OH-Zahl von 56 werden bei Raumtemperatur mit 55 g Raney-Ni/Fe (70:30) (wie z.B. in US-Patent 4.287.365 offenbart) und 5,5g Aluminiumpulver in einen 3-Liter Rührautoklaven gegeben.

Nach Spülen mit Wasserstoff werden 380 ml flüssiges Ammoniak eingefüllt und 30 bar Wasserstoff aufgedrückt. Die Reaktionsmischung wird unter Rühren auf 225°C aufgeheizt, wobei der Druck auf ca. 180 bar steigt.

Nach 20 Stunden bei 225°C wird der Autoklav abgekühlt und entspannt. Das Raney-Ni/Fe wird abfiltriert und das Filtrat im Vakuum bei 150°C von flüchtigen Bestandteilen wie Ammoniak und Wasser befreit.

Der NH₂-Gehalt ist 1,39 Gew.-%, das entspricht einem Aminierungsgrad von 87 % (bestimmt durch Titration mit 1n HCl, Bromphenolblau als Indikator).

### Vergleich:

Die analoge Aminierung des Polytetrahydrofurans (OH-Zahl = 56) ohne Al-Pulver führt zu einem NH₂-Gehalt von 1,18 %, was einem Aminierungsgrad von 74 % entspricht.

### Beispiel 2

1500 g eines Polyethylenglykols einer OH-Zahl von 14 werden wie in Beispiel 1 beschrieben aminiert. Das Produkt hat danach einen NH₂-Gehalt von 0,40 Gew.-%, was einem Aminierungsgrad von 100 % entspricht Zum Vergleich: Bei analoger Aminierung ohne Al-Pulver erhält man einen NH₂-Gehalt von 0,30 Gew.-%, was einem Aminierungsgrad von 75 % entspricht.

### Beispiel 3

1500 g eines auf Bis(4-hydroxyphenyl)methan gestarteten Polypropylenglykols einer OH-Zahl von 112 werden wie in Beispiel 1 aminiert. Das Produkt hat danach einen NH₂-Gehalt von 2,85 Gew.-%, was einem Aminierungsgrad von 89 % entspricht.

### Vergleich:

Bei analoger Aminierung ohne Al-Pulver erhält man einen NH₂-Gehalt von 1,69 Gew.-%, was einem Aminierungsgrad von 53 % entspricht.

### Beispiel 4

1500 g eines auf Bis(4-hydroxyphenyl)methan gestarteten Polypropylenglykols einer OH-Zahl von 112 werden wie in Beispiel 3 aminiert mit der Ausnahme, daß statt 5,5 g Aluminiumpulver 2,75 g Aluminiumpulver eingesetzt werden. Das Reaktionsprodukt hat einen NH₂-Gehalt von 2,30 Gew.-% und entspricht einem Aminierungsgrad von 72 %.

### Beispiel 5

1500 g eines auf Bis(4-hydroxyphenyl)methan gestarteten Polypropylenglykols einer OH-Zahl von 112 werden wie in Beispiel 1 aminiert mit der Ausnahme, daß statt 55 g Raney-Ni/Fe (70:30) 55 g Raney-Nickel eingesetzt werden. Das Produkt hat danach einen NH₂-Gehalt von 2,63 Gew.-%, was einem Aminierungsgrad von 82 % entspricht.

### Vergleich:

Bei analoger Aminierung ohne Al-Pulver erhält man einen NH₂-Gehalt von 1,92 Gew.-%, was einer Aminierung von 60 % entspricht.

## Patentansprüche

1. Verfahren zur Herstellung von Aminopolyalkylenoxiden aus Hydroxypolyalkylenoxiden und Ammoniak und/oder primären bzw. sekundären Aminen in Gegenwart von Wasserstoff und Raney-Katalysatoren, dadurch gekennzeichnet, daß als Co-Katalysator 1-50 Gew.-% - bezogen auf den Raney-Katalysator - Aluminiumpulver einer Korngröße von 5-100 »m eingesetzt wird.

2. Verfahren nach Anspruch 1, dadurch gekennzeichnet, daß als Hydroxypolyalkylenoxid solche der allgemeinen Formel
R[-(A)-OH]_{z}
worin bedeuten
R ein Rest einer Zerewitinow-aktiven Verbindung, erhältlich durch Abzug der aktiven Wasserstoffatome,
A mit O-Atomen unterbrochene, gegebenenfalls mit Alkylresten substituierte Kette aus gegebenenfalls unterschiedlichen Alkylenen eines mittleren Molgewichts (Mn) von 500 - 10 000; z = 1-4,
eingesetzt werden.

3. Verfahren nach einem der Ansprüche 1 bzw. 2, dadurch gekennzeichnet, daß als Hydroxypolyalkylenoxid
R(-(A)-OH)_{z} ,
wobei
R ein Phendioxyrest ist und
A die obengenannte Bedeutung hat,
eingesetzt wird.

## Claims

1. A process for the production of aminopolyalkylene oxides from hydroxypolyalkylene oxides and ammonia and/or primary or secondary amines in the presence of hydrogen and Raney catalysts, characterized in that 1 to 50% by weight, based on the Raney catalyst, of aluminium powder having a particle size of 5 to 100 »m is used as cocatalyst.

2. A process as claimed in claim 1, characterized in that the hydroxypolyalkylene oxides used correspond to the following general formula
R[-(A)-OH]_{z}
in which
R is the residue of a zerewitinoff-active compound obtainable by removal of the active hydrogen atoms,
A represents an optionally alkyl-substituted chain - interrupted by O atoms - of optionally different alkylenes having an average molecular weight (Mn) in the range from 500 to 10,000; z = 1-4.

3. A process as claimed in claim 1 or 2, characterized in that the hydroxypolyalkylene oxide used corresponds to the formula
R(-(A)-OH)_{z}
in which
R is a diphenoxy group and
A is as defined above.

## Revendications

1. Procédé de préparation d'aminopoly(oxydes d'alkylène) à partir d'hydroxypoly(oxydes d'alkylène) et d'ammoniac et/ou d'amines primaires ou secondaires, en présence d'hydrogène et de catalyseurs de Raney, caractérisé en ce qu'on utilise, en tant que cocatalyseur, de 1 à 50 % en masse, par rapport aux catalyseurs de Raney, de poudre d'aluminium ayant une grosseur de grains comprise entre 5 et 100 »m.

2. Procédé selon la revendication 1, caractérisé en ce qu'on utilise, en tant qu'hydroxypoly(oxydes d'alkylène), ceux de formule générale
R[-(A)-OH]_{z}
dans laquelle
R représente un radical d'un composé actif selon la réaction de Zerevitinov, qu'on peut obtenir par élimination des atomes d'hydrogène actifs,
A représente une chaîne d'alkylènes, le cas échéant différents, interrompue par des atomes d'oxygène, substituée le cas échéant par des radicaux alkyle, de masse moléculaire moyenne (Mn) comprise entre 500 et 10 000 ; z = 1-4.

3. Procédé selon l'une quelconque des revendications 1 et 2, caractérisé en ce qu'on utilise, en tant qu'hydroxypoly(oxyde d'alkylène)
R(-(A)-OH)_{z}
étant entendu que
R représente un radical phénylènedioxy et
A a la signification donnée ci-dessus.
